# EUROPEAN PATENT SPECIFICATION

(11) **EP 1 652 065 B1**
(45) Date of publication and mention of the grant of the patent: **04.09.2013**
(21) Application number: 04744560.6
(22) Date of filing: 13.07.2004
(51) Int. Cl.: G06F 7/58, H04B 1/707

(54) **DEVICE AND METHOD FOR COMPOSING CODES**
VORRICHTUNG UND VERFAHREN ZUR ZUSAMMENSETZUNG VON KODES
DISPOSITIF ET PROCEDE DE COMPOSITION DE CODES

(30) Priority: 23.07.2003 EP 03102265
(43) Date of publication of application: 03.05.2006
(73) Proprietor: ST-Ericsson SA, 1228 Plan-les-Ouates, Genève (CH)
(72) Inventor: VAN BERKEL, Cornelis, H., NL-5656 AA Eindhoven (NL); MEUWISSEN, Patrick, P., E., NL-5656 AA Eindhoven (NL); NAS, Ricky, J., M., NL-5656 AA Eindhoven (NL)
(74) Representative: Bird, William Edward
(86) International application number: PCT/IB2004/051201
(87) International publication number: WO 2005/008474

(56) References cited:
- US-A- 4 809 295
- US-A- 5 022 049
- US-A1- 2001 048 380
- US-A1- 2002 018 518

## Description

The invention relates to a device arranged to compose basic-code vectors into a composite-code vector. The invention also relates to a method for composing basic-code vectors into a composite-code vector.

There is a variety of CDMA-like transmission standards, for example UMTS, CDMA2000, TD-SCDMA, and standards for other applications based on spread spectrum technology such as the global positioning system (GPS). Each of these standards uses a variety of different codes for synchronization, spreading and de-spreading, scrambling and de-scrambling, preambles and for other purposes. These codes are typically composed from a variety of basic codes, such as pseudo noise (PN) codes, Hadamard codes and OVSF codes. The basic codes often have parameters, for example generator polynomials, offsets and masks.

A specific composite code can typically be generated by relatively simple and cheap hardware, like a linear feedback shift register (LFSR). A UMTS receiver, for example, then uses a variety of such generators to generate a specific composite code. However, this specific composite code is directly associated with the UMTS standard and therefore it is not generic.

Configurable vector processors can be equipped with code generators, so that they are capable of handling different standards and codes. Furthermore, they can be arranged to provide support for related functions such as cyclic redundancy check (CRC). A configurable vector processor would then be equipped with a plurality of generators which generate basic codes in vector format. However, a disadvantage of such a configurable vector processor is that it cannot provide a composite code which is dependent on such basic codes. This is necessary if the configurable vector processors should be flexible enough to support a variety of CDMA-like standards.

In other words, to be applicable for the above-mentioned standards a configurable vector processor requires a single generator which is capable of supporting a plurality of transmission standards and codes, including support for related functions. It also requires that the single generator must produce a code vector of *N* elements, *N* being for example 16.

A code is also referred to as a sequence of symbols. A symbol is also referred to as a code chip or an element. A symbol may be a bit or another numerical value, either a real value or a complex value. A code vector is defined as a part of a complete code; the code vector comprises more than one symbol and is generated with a throughput of one vector per clock cycle.

US 2001/0048380 discloses a configurable code generator system for spread spectrum applications. This system comprises a composite code generator unit, a global code generator, and an interface that is coupled to the composite code generator and the global code generator. The system is capable of generating one code chip per clock cycle. The output code of the system may be a composite code based on several basic codes. It is also capable of generating several composite codes in parallel. However, the system is not capable of generating composite-code vectors comprising more than one code chip per clock cycle.

It is an object of the invention to provide a configurable generator of the kind set forth which is capable of generating composite-code vectors for a variety of transmission standards. This object is achieved by providing a device arranged to compose basic-code vectors into a composite-code vector and a method for composing basic-code vectors into a composite-code vector.

The device according to the invention is provided with at least two weighted sum units, which are able to make a selection out of a plurality of incoming basic-code vectors by means of a weighted sum operation, under the control of a configuration word. The elements of this configuration word represent the weighting factors which are used to select or deselect a basic-code vector. The selected basic-code vectors are added together and the result of the weighted sum operation is then output as an intermediate-code vector. Subsequently, the intermediate-code vectors are added together by an add unit and output as a composite-code vector. The ability to make selections out of a plurality of incoming basic-code vectors and to add intermediate-code vectors into a composite-code vector, together with the ability to configure the operations of the functional units of the device by means of configuration words, increases the flexibility of the device significantly. This flexibility is needed to support a variety of transmission standards.

An embodiment of the device is defined in claim 2, wherein one or more pre-processing units are provided. A pre-processing unit can be coupled between each weighted sum unit and the add unit. The pre-processing units can perform additional operations on the intermediate-code vectors, such as doubling of the length or applying a mask.

A further embodiment of the device is defined in claim 3, wherein a post-processing unit is provided. The post-processing unit can be coupled to the add unit and perform additional operations on the composite-code vector, such as a conditional negation.

If the code vectors are sequences of bits, then the embodiment defined in claim 4 is suitable. In that case, the weighted sum units calculate a bit-wise addition of the incoming basic-code vectors.

The embodiments defined in claims 5 and 6 comprise pre-processing units which perform specific functions, namely doubling of the length of the intermediate-code vectors, and applying a mask on the intermediate-code vectors, respectively. A post-processing unit performing a specific function is comprised in the embodiment defined in claim 7, wherein a conditional negation of the composite-code vector is performed.

New contents of the configuration words can be provided at regular intervals during a configuration stage of the device. The embodiments defined in claims 8, 9 and 10 comprise devices which are arranged to be configured in such a manner.

These and other aspects of the invention are described in more detail with reference to the drawings, in which:
Fig. 1 illustrates a device arranged to combine basic-code vectors according to the invention;
Fig. 2 illustrates various components of the device arranged to combine basic-code vectors according to the invention;
Fig. 3 illustrates an example of a functional specification of the device;
Fig. 4 illustrates an example of a functional specification of the components, corresponding with the example illustrated in Fig. 3.

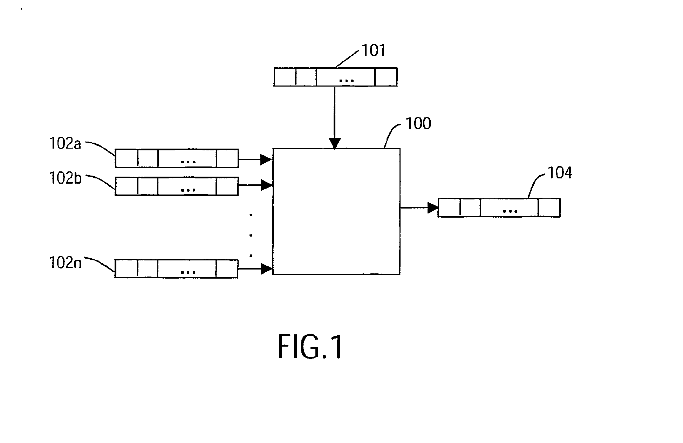

Fig. 1 illustrates a device 100 arranged to combine basic-code vectors according to the invention. An input of the device 100 comprises a plurality of basic-code vectors 102a, 102b up to and including 102n. An output of the device 100 comprises a composite-code vector 104. The device 100 is capable of combining the basic-code vectors 102a, 102b up to and including 102n, under the control of a code configuration word 101. The use of the code configuration word 101 provides a certain degree of flexibility to the device 100, in the sense that the operation of the device 100 (determined by the functions which can be performed by the various components of the device 100) can be configured regularly.

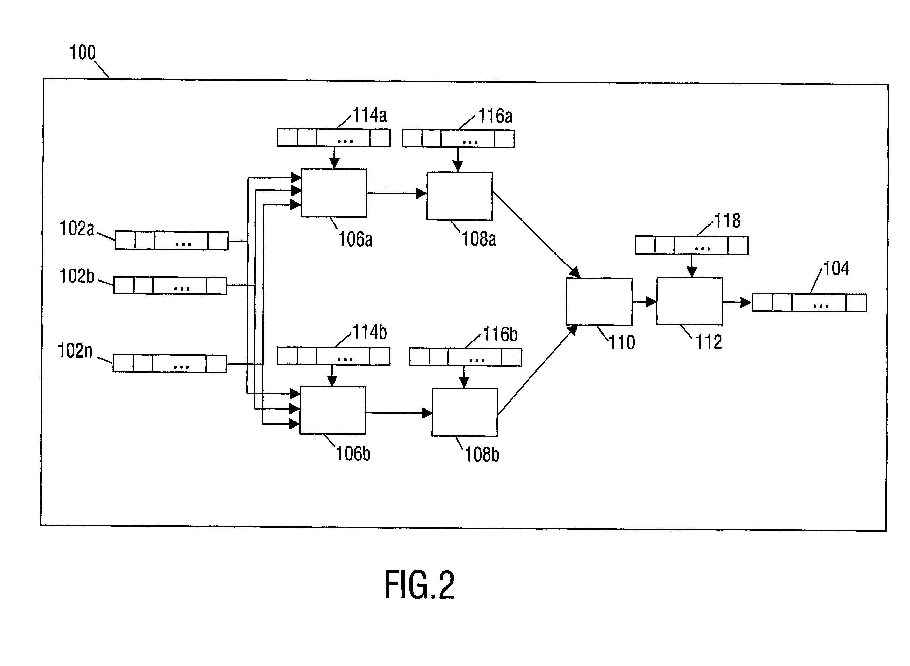

Fig. 2 illustrates various components of the device 100 arranged to combine a plurality of basic-code vectors 102a, 102b up to and including 102n, according to the invention. The device 100 comprises at least two weighted sum units 106a, 106b, and an add unit 110. Optionally, the device 100 comprises one or more pre-processing units 108a, 108b. Furthermore, a post-processing unit 112 may be provided, which can be coupled to a weighted sum unit 106a, 106b, and to the add unit 110.

An input of the weighted sum units 106a, 106b receives a plurality of the basic-code vectors 102a, 102b up to and including 102n. The output of the weighted sum units 106a, 106b is provided as input to the add unit 110, or, if the device 100 comprises one or more pre-processing units 108a, 108b, as input to the pre-processing units. If the device 100 comprises one or more pre-processing units 108a, 108b, then the output of the pre-processing units is provided as input to the add unit 110. The output of the add unit 110 is the composite-code vector 104. Alternatively, if a post-processing unit 112 is deployed in the device 100, then the output of the add unit 110 is provided as input to the post-processing unit 112. In that case, the output of the post-processing unit 112 is the composite-code vector 104.

The code configuration word 101 can be split into smaller configuration words 114a, 114b, 116a, 116b, 118, which can be fed to several components of the device 100. A configuration word is also a sequence of symbols in vector format and the length of such a configuration word may vary; it is not per definition equal to the length of the basic-code vectors 102a, 102b up to and including 102n, the composite-code vector 104 or intermediate-code vectors produced by the components of the device 100. The configuration words 114a, 114b, 116a, 116b, 118, are used to configure the functions performed by the components 106a, 106b, 108a, 108b, 112, of the device 100.

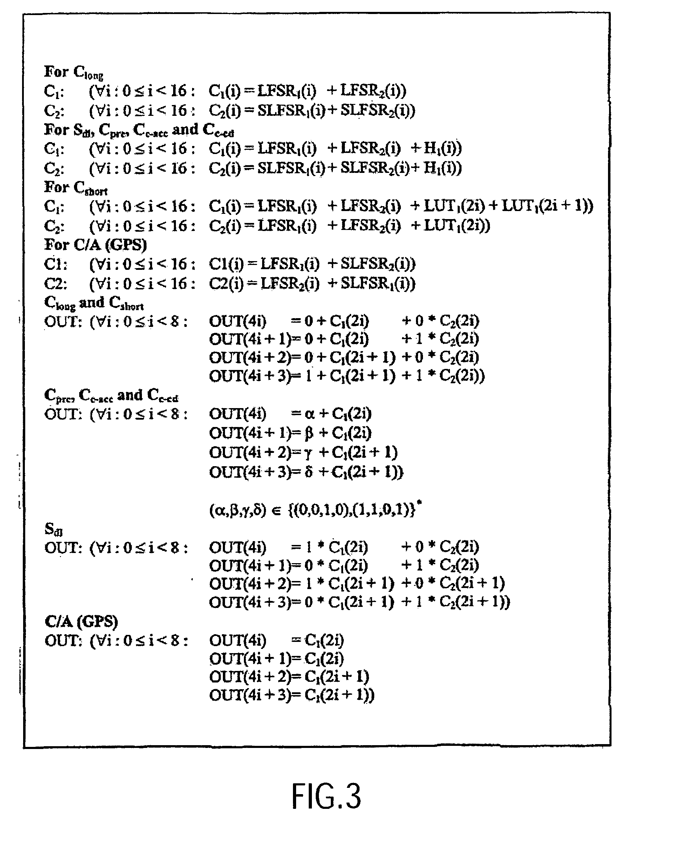

Fig. 3 illustrates an example of a functional specification of the device 100. The specification applies to basic-code vectors with a length of 16 elements (bits) and a composite-code vector with a length of 32 elements (bits). The device 100 accepts as input a plurality of basic-code vectors 102a, 102b up to and including 102n, such as LFSR₁, LFSR₂, SLFSR₁, SLFSR₂, H₁, and LUT₁. In this example, LFSR₁ and LFSR₂ are basic-code vectors generated by linear feedback shift registers, SLFSR₁ and SLFSR₂ are the shifted or delayed output of the linear feedback shift registers, H₁ is a Hadamard basic-code vector and LUT₁ is a basic-code vector generated by means of a table look-up facility. It is specified which intermediate-code vectors C₁ and C₂ should be generated for several cases C_{long}, S_{dl}, Cₚᵣₑ, C_{c}acc, C_{c-cd}, Cₛₕₒᵣₜ, and C/A (GPS), representing different codes for CDMA-like standards and for systems like GPS. It is also specified how a composite-code vector 104, referred to as OUT in the specification, should be generated on basis of the intermediate-code vectors C₁ and C₂, in each of the cases C_{long}, S_{dl}, Cₚᵣₑ, C_{c-acc}, C_{c-cd}, Cₛₕₒᵣₜ, and C/A (GPS).

The cases C_{long}, S_{dl}, Cₚᵣₑ, C_{c-acc}, C_{c-cd}, Cₛₕₒᵣₜ, and C/A (GPS), represent the following codes:
- C_{long} represents a sum of two pseudo random noise (PRN) codes which are generated by linear feedback shift registers, and it also represents delayed versions of these codes;
- S_{dl} represents a combination of a normal and a delayed version of a C_{long} code;
- Cₚᵣₑ, C_{c-acc} and C_{c-cd} represent combinations of a C_{long} code and a Hadamard code;
- Cₛₕₒᵣₜ represents a sum of three pseudo random noise (PRN) codes, two of which are generated by linear feedback shift registers and one by means of a look-up table facility;
- C/A (GPS) represents a sum of two pseudo random noise (PRN) codes which are generated by linear feedback shift registers, and it also represents delayed versions of these codes, with configuration parameters different from C_{long}.

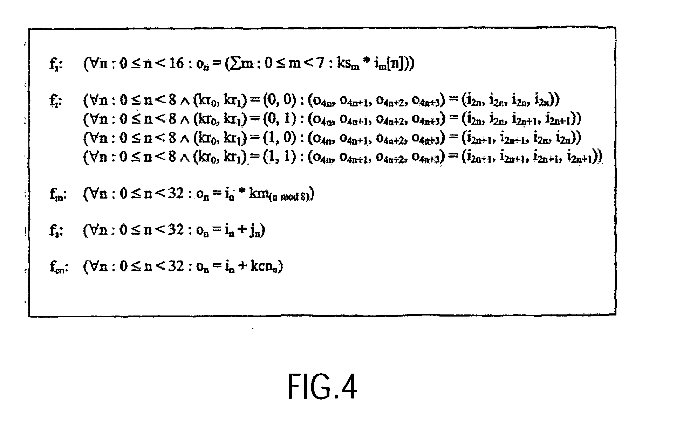

Fig. 4 illustrates an example of a functional specification of the components 106a, 106b, 108a, 108b, 110, 112, corresponding with the example as illustrated in Fig. 3.

Function fₛ is a function which can be performed by the weighted sum units 106a, 106b. In the specification, the elements of the intermediate-code vector are represented by oₙ, wherein variable 'n' identifies the location of the elements within the intermediate-code vector. The elements of the incoming basic-code vectors 102a, 102b up to and including 102n, are represented by iₘ[n], wherein variable 'm' identifies the basic-code vectors and variable 'n' identifies the location of the elements within a basic-code vector. In this case, the elements of the configuration words 114a, 114b are represented by ksₘ, wherein variable 'm' identifies the location of the elements. The number of elements of the configuration words 114a, 114b is 7, which is equal to the number of incoming basic-code vectors 102a, 102b up to and including 102n. According to the specification, the function selects a subset of the basic-code vectors 102a, 102b up to and including 102n, and calculates a bit-wise addition of them.

Function fᵣ is a function which can be performed by the pre-processing units 108a, 108b. In the specification, the elements of the intermediate-code vector are represented by i₂ₙ, i₂ₙ₊₁, and O₄ₙ, O₄ₙ₊₁, O₄ₙ₊₂, O₄ₙ₊₃, respectively, wherein variable 'n' is used to identify the location of the elements. The incoming intermediate-code vector is represented by i₂ₙ, i₂ₙ₊₁ and the outgoing intermediate-code vector is represented by O₄ₙ, O₄ₙ₊₁, O₄ₙ₊₂, O₄ₙ₊₃. The elements of the configuration words 116a, 116b are represented by kr₀, kr₁. According to the specification, the function doubles the length of the incoming intermediate-code vector by repeating and reordering elements. The pre-processing units 108a, 108b can erase, repeat and reorder the elements of the intermediate-code vectors.

Function fₘ is another function which can be performed by the pre-processing units 108a, 108b. The elements of the incoming and outgoing intermediate-code vector are represented by iₙ and Oₙ, respectively, wherein variable 'n' identifies the location of the elements. The elements of the configuration words 116a, 116b are represented by km_{(n mod 8)}, wherein variable 'n' is used to identify the location of the elements. According to the specification, the function applies a mask on the intermediate-code vector.

Function fₐ is a function which can be performed by the add unit 110. According to the specification, two intermediate-code vectors in and jₙ, wherein variable 'n' identifies the location of the elements within the intermediate-code vectors, are added using bit-wise addition and the result is output as the composite-code vector 104, represented by oₙ, wherein variable 'n' represents the location of the elements within the composite-code vector.

Function f_{cn} is a function which can be performed by the post-processing unit 112. The elements of the ingoing composite-code vector and outgoing composite-code vector are represented by in and oₙ, respectively, wherein variable 'n' identifies the location of the elements. The elements of the configuration word 118 are represented by kcnₙ, wherein variable 'n' identifies the location of the elements. According to the specification, the function adds the contents of the configuration word to the composite-code vector 104 using bit-wise addition. This is also referred to as a conditional negation of the composite-code vector 104.

It is remarked that the scope of protection of the invention is not restricted to the embodiments described herein. Neither is the scope of protection of the invention restricted by the reference symbols in the claims. The word 'comprising' does not exclude other parts than those mentioned in a claim. The word'a(n)' preceding an element does not exclude a plurality of those elements. Means forming part of the invention may both be implemented in the form of dedicated hardware or in the form of a programmed general-purpose processor. The invention resides in each new feature or combination of features.

## Claims

1. A device (100) arranged to compose basic-code vectors (102a, 102b up to and including 102n) into a composite-code vector (104), the device (100) comprising:
- at least two weighted sum units (106a, 106b), each weighted sum unit being arranged to provide an intermediate-code vector which is a weighted sum of a plurality of the basic-code vectors (102a, 102b up to and including 102n);
- an add unit (110), the add unit being arranged to sum the intermediate-code vectors into the composite-code vector (104);
- the weighted sum units (106a, 106b) being under the control of a first and a second configuration word (114a. 114b) elements of the respective configuration word (114a, 114b) representing respective weighting factors used to select or deselect a basic-code vector, wherein the first and the second configuration word (114a, 114b) are deployed to configure the operations performed by the weighted sum units.

2. A device (100) according to claim 1, wherein a pre-processing unit (108a, 108b) is coupled to at least one of the weighted sum units (106a, 106b) and to the add unit (110), the pre-processing unit (108a, 108b) being arranged to perform additional operations on the intermediate-code vector, the pre-processing unit (108a, 108b) being under the control of a third and a fourth configuration word (116a, 116b), wherein the third and the fourth configuration word (116a, 116b) are deployed to configure the additional operations on the intermediate-code vector.

3. A device (100) according to claim 1, wherein a post-processing unit (112) is coupled to the add unit (110), the post-processing unit (112) being arranged to perform additional operations on the composite-code vector (104), the post-processing unit (112) being under the control of a fifth configuration word (118), wherein the fifth configuration word (118) is deployed to configure the additional operations on the composite-code vector.

4. A device (100) according to claim 1, wherein the weighted sum units (106a, 106b) are arranged to calculate a bit-wise addition of at least two basic-code vectors (102a, 102b up to and including 102n).

5. A device (100) according to claim 2, wherein the pre-processing unit (108a, 108b) is arranged to erase, repeat and reorder the elements of the intermediate-code vector.

6. A device (100) according to claim 2, wherein the pre-praeessing unit (108a, 108b) is arranged to apply a mask on the intermediate-code vector.

7. A device (100) according to claim 3, wherein the post-processing unit (112) is arranged to perform a conditional negation of the composite-code vector (104).

8. A device (100) according to claim 1, wherein the weighted sum units (106a, 106b) and the add unit (110) are arranged to be configured during a configuration stage of the operation of the device (100).

9. A device (100) according to claim 2, wherein the pre-processing unit (108a, 108b) is arranged to be configured during a configuration stage of the operation of the device (100).

10. A device (100) according to claim 3, wherein the post-processing unit (112) is arranged to be configured during a configuration stage of the operation of the device (100).

11. A method for composing basic-code vectors (102a, 102b up to and including 102n) into a composite-code vector (104), the method comprising the steps of:
(a) providing a first and a second intermediate-code vector, each of which is a weighted sum of a plurality of the basic-code vectors (102a, 102b up to and including 102n);
(b) summing the intermediate-code vectors into a composite-code vector (104);
(c) providing a first and a second configuration word (114a, 114b) elements of the respective configuration word (114a. 114b) representing respective weighting factors used to select or deselect a basic-code vector,;
(d) controlling step (a) with the first and the second configuration word (114a, 114b).

## Patentansprüche

1. Vorrichtung (100), die zum Kombinieren von Basiscode-Vektoren (102a, 102b bis zu und einschließlich 102n) zu einem Kombinationscode-Vektor (104) angeordnet ist, wobei die Vorrichtung (100) umfasst:
- mindestens zwei gewichtete Summeneinheiten (106a, 106b), wobei jede gewichtete Summeneinheit zum Vorsehen eines Zwischencode-Vektors angeordnet ist, der eine gewichtete Summe von mehreren der Basiscode-Vektoren (102a, 102b bis zu und einschließlich 102n) ist;
- eine Additionseinheit (110), wobei die Additionseinheit zum Summieren der Zwischencode-Vektoren zu dem Kombinationscode-Vektor (104) angeordnet ist;
- wobei die gewichteten Summeneinheiten (106a, 106b) unter der Steuerung eines ersten und eines zweiten Konfigurationswortes (114a, 114b) stehen, wobei Elemente des jeweiligen Konfigurationswortes (114a, 114b) entsprechende Gewichtungsfaktoren darstellen, die zum Wählen oder Abwählen eines Basiscode-Vektors verwendet werden, wobei das erste und zweite Konfigurationswort (114a, 114b) zum Konfigurieren der Operationen angewendet werden, die von den gewichteten Summeneinheiten durchgeführt werden.

2. Vorrichtung (100) nach Anspruch 1, wobei eine Vorverarbeitungseinheit (108a, 108b) an mindestens eine der gewichteten Summeneinheiten (106a, 106b) und an die Additionseinheit (110) gekoppelt ist, wobei die Vorverarbeitungseinheit (108a, 108b) so angeordnet ist, dass sie zusätzliche Operationen an dem Zwischencode-Vektor durchführt, wobei die Vorverarbeitungseinheit (108a, 108b) unter der Steuerung eines dritten und eines vierten Konfigurationswortes (116a, 116b) steht, wobei das dritte und das vierte Konfigurationswort (116a, 116b) zum Konfigurieren der zusätzlichen Operationen an dem Zwischencode-Vektor angewendet werden.

3. Vorrichtung (100) nach Anspruch 1, wobei eine Nachverarbeitungseinheit (112) an die Additionseinheit (110) gekoppelt ist, wobei die Nachverarbeitungseinheit (112) so angeordnet ist, dass sie zusätzliche Operationen an dem Kombinationscode-Vektor (104) durchführt, wobei die Nachverarbeitungseinheit (112) unter der Steuerung eines fünften Konfigurationswortes (118) steht, wobei das fünfte Konfigurationswort (118) zum Konfigurieren der zusätzlichen Operationen an dem Kombinationscode-Vektor angewendet wird.

4. Vorrichtung (100) nach Anspruch 1, wobei die gewichteten Summeneinheiten (106a, 106b) zum Berechnen einer Bit-weisen Addition von mindestens zwei Basiscode-Vektoren (102a, 102b bis zu und einschließlich 102n) angeordnet sind.

5. Vorrichtung (100) nach Anspruch 2, wobei die Vorverarbeitungseinheit (108a, 108b) zum Löschen, Wiederholen oder Neuordnen der Elemente des Zwischencode-Vektors angeordnet ist.

6. Vorrichtung (100) nach Anspruch 2, wobei die Vorverarbeitungseinheit (108a, 108b) zum Anlegen einer Maske an den Zwischencode-Vektor angeordnet ist.

7. Vorrichtung (100) nach Anspruch 3, wobei die Nachverarbeitungseinheit (112) zum Durchführen einer bedingten Verneinung des Kombinationscode-Vektors (104) angeordnet ist.

8. Vorrichtung (100) nach Anspruch 1, wobei die gewichteten Summeneinheiten (106a, 106b) und die Additionseinheit (110) so angeordnet sind, dass sie während einer Konfigurationsstufe des Betriebs der Vorrichtung (100) konfiguriert werden.

9. Vorrichtung (100) nach Anspruch 2, wobei die Vorverarbeitungseinheit (108a, 108b) so angeordnet ist, dass sie während einer Konfigurationsstufe des Betriebs der Vorrichtung (100) konfiguriert wird.

10. Vorrichtung (100) nach Anspruch 3, wobei die Nachverarbeitungseinheit (112) so angeordnet ist, dass sie während einer Konfigurationsstufe des Betriebs der Vorrichtung (100) konfiguriert wird.

11. Verfahren zum Kombinieren von Basiscode-Vektoren (102a, 102b bis zu und einschließlich 102n) zu einem Kombinationscode-Vektor (104), wobei das Verfahren folgende Schritte umfasst:
(a) Vorsehen eines ersten und eines zweiten Zwischencode-Vektors, von welchen jeder eine gewichtete Summe der mehreren Basiscode-Vektoren (102a, 102b bis zu und einschließlich 102n) ist;
(b) Summieren der Zwischencode-Vektoren zu einem Kombinationscode-Vektor (104);
(c) Vorsehen eines ersten und eines zweiten Konfigurationswortes (114a, 114b), wobei Elemente des jeweiligen Konfigurationswortes (114a, 114b) entsprechende Gewichtungsfaktoren darstellen, die zum Wählen oder Abwählen eines Basiscode-Vektors verwendet werden;
(d) einen Steuerungsschritt (a) mit dem ersten und dem zweiten Konfigurationswort (114a, 114b).

## Revendications

1. Dispositif (100) agencé pour composer des vecteurs de code de base (102a, 102b jusqu'à 102n inclus) en un vecteur de code composite (104), le dispositif (100) comprenant :
- au moins deux unités de somme pondérée (106a, 106b), chaque unité de somme pondérée étant agencée pour fournir un vecteur de code intermédiaire qui est une somme pondérée d'une pluralité des vecteurs de code de base (102a, 102b jusqu'à 102n inclus) ;
- une unité d'addition (110), l'unité d'addition étant agencée pour sommer les vecteurs de code intermédiaire en vecteur de code composite (104) ;
- les unités de somme pondérée (106a, 106b) étant sous la commande d'un premier et d'un deuxième mot de configuration (114a, 114b) éléments du mot de configuration respectif (114a, 114b) représentant des coefficients de pondération respectifs utilisés pour sélectionner ou déselectionner un vecteur de code de base, dans lesquels le premier et le deuxième mot de configuration (114a, 114b) sont déployés pour configurer les opérations effectuées par les unités de somme pondérée.

2. Dispositif (100) selon la revendication 1, dans lequel une unité de prétraitement (108a, 108b) est couplée à au moins une des unités de somme pondérée (106a, 106b) et à l'unité d'addition (110), l'unité de prétraitement (108a, 108b) étant agencée pour effectuer des opérations supplémentaires sur le vecteur de code intermédiaire, l'unité de prétraitement (108a, 108b) étant sous la commande d'un troisième et d'un quatrième mot de configuration (116a, 116b), dans lesquels le troisième et le quatrième mot de configuration (116a, 116b) sont déployés pour configurer les opérations supplémentaires sur le vecteur de code intermédiaire.

3. Dispositif (100) selon la revendication 1, dans lequel une unité de post-traitement (112) est couplée à l'unité d'addition (110), l'unité de post-traitement (112) étant agencée pour effectuer des opérations supplémentaires sur le vecteur de code composite (104), l'unité de post-traitement (112) étant sous la commande d'un cinquième mot de configuration (118), dans lequel le cinquième mot de configuration (118) est déployé pour configurer les opérations supplémentaires sur le vecteur de code composite.

4. Dispositif (100) selon la revendication 1, dans lequel les unités de somme pondérée (106a, 106b) sont agencées pour calculer une addition par bits d'au moins deux vecteurs de code de base (102a, 102b jusqu'à 102n inclus).

5. Dispositif (100) selon la revendication 2, dans lequel l'unité de prétraitement (108a, 108b) est agencée pour effacer, répéter et réordonner les éléments du vecteur de code intermédiaire.

6. Dispositif (100) selon la revendication 2, dans lequel l'unité de prétraitement (108a, 108b) est agencé pour appliquer un masque sur le vecteur de code intermédiaire.

7. Dispositif (100) selon la revendication 3, dans lequel l'unité de post-traitement (112) est agencée pour effectuer une négation conditionnelle du vecteur de code composite (104).

8. Dispositif (100) selon la revendication 1, dans lequel les unités de somme pondérée (106a, 106b) et l'unité d'addition (110) sont agencées pour être configurées pendant une phase de configuration du fonctionnement du dispositif (100).

9. Dispositif (100) selon la revendication 2, dans lequel l'unité de prétraitement (108a, 108b) est agencée pour être configurée pendant une phase de configuration du fonctionnement du dispositif (100).

10. Dispositif (100) selon la revendication 3, dans lequel l'unité de post-traitement (112) est agencée pour être configurée pendant une phase de configuration du fonctionnement du dispositif (100).

11. Procédé pour composer des vecteurs de code de base (102a, 102b jusqu'à 102n inclus) en un vecteur de code composite (104), le procédé comprenant les étapes de :
(a) fourniture d'un premier et d'un second vecteur de code intermédiaire, chacun d'eux étant une somme pondérée d'une pluralité des vecteurs de code de base (102a, 102b jusqu'à 102n inclus) ;
(b) sommation des vecteurs de code intermédiaire en un vecteur de code composite (104) ;
(c) fourniture d'un premier et d'un deuxième mot de configuration (114a, 114b) éléments du mot de configuration respectif (114a, 114b) représentant des coefficients de pondération respectifs utilisés pour sélectionner ou déselectionner un vecteur de code de base ;
(d) commande de l'étape (a) avec le premier et le second mot de configuration (114a, 114b).
